Europäisches Patentamt

European Patent Office

Office européen des brevets

(11) Numéro de publication: **0 247 949 B1**

# (12) FASCICULE DE BREVET EUROPEEN

(45) Date de publication de fascicule du brevet: **11.11.92**

(51) Int. Cl.⁵: **G01S 13/87**, G01S 5/10, G01V 1/38

(21) Numéro de dépôt: **87401494.7**

(22) Date de dépôt: **29.06.87**

(54) **Procédé et systeme de localisation et de correction d'orientation d'un objet mobile autonome et d'un objet mobile non autonome.**

(30) Priorité: **01.07.86 FR 8609529**

(43) Date de publication de la demande:
**02.12.87 Bulletin 87/49**

(45) Mention de la délivrance du brevet:
**11.11.92 Bulletin 92/46**

(84) Etats contractants désignés:
**ES FR GB IT NL**

(56) Documents cités:
WO-A-84/03153     FR-A- 2 248 517
FR-A- 2 533 706     GB-A- 2 138 942
US-A- 2 920 320     US-A- 4 229 737

(73) Titulaire: **COMPAGNIE GENERALE DE GEO-PHYSIOUE**
**1, Rue Léon Migaux B.P. 56**
**F-91301 Massy Cédex(FR)**

(72) Inventeur: **Regnaudin, Jacques**
**14, rue des Combes**
**F-75017 Paris(FR)**
Inventeur: **Boucquaert, François**
**Saint-Denis**
**F-46150 Catus(FR)**

(74) Mandataire: **Martin, Jean-Jacques et al**
**Cabinet REGIMBEAU 26, Avenue Kléber**
**F-75116 Paris(FR)**

## Description

La présente invention est relative à un procédé mettant en oeuvre un système de radionavigation permettant de façon courante de localiser un point de référence d'un premier objet mobile et permettant sans modification du système de radionavigation :

- de localiser à bord du premier objet plusieurs seconds objets mobiles liés ou non à ce premier objet, et ceci en temps réel ;
- d'orienter la direction définie par chacun de ces seconds objets et le point de référence du premier objet à bord de celui-ci et en temps réel,
- d'orienter une direction de référence liée à la structure du premier objet mobile dans le cas où des systèmes acoustiques, optiques ou radioélectriques liés au premier objet permettent de définir l'orientation des seconds mobiles par rapport à la direction de référence du premier mobile ; ceci est également valable si les systèmes acoustiques, optiques ou radioélectriques précités permettent de localiser les second objets dans un référentiel lié à la structure du premier mobile. Cette opération est effectuée à bord du premier mobile et en temps réel.

Les systèmes de radionavigation utilisés de nos jours pour la localisation d'objets mobiles, tels que des navires ou analogues mettent en oeuvre le plus souvent un système de radionavigation permettant une localisation de type circulaire ou hyperbolique. Le principe de localisation d'un ou plusieurs objets mobiles autonomes par rapport à l'un ou l'autre des systèmes de localisation ne pose pas de problème majeur, la modification de la position relative de l'un ou l'autre des mobiles autonomes, voire de leur orientation relative par rapport à une direction de référence, ne mettant en jeu qu'un échange de leur position respective déterminée par rapport à un même système de radionavigation de référence dans les conditions normales d'utilisation de ce dernier.

Lorsqu'il est nécessaire de définir l'orientation de la direction formée par un deuxième objet non autonome et au moins un point de référence du premier objet autonome, le deuxième objet non autonome n'étant pas en lui-même susceptible de calculer et communiquer sa position au premier objet mobile, autonome, les solutions proposées à ce jour ont le plus souvent consisté, à définir l'écart angulaire entre cette direction et une direction de référence liée au premier mobile par des procédés acoustiques, optiques ou radioélectriques référencés au premier mobile.

Si l'écart angulaire peut être défini avec une précision satisfaisante, il n'en va pas de même de l'orientation absolue qui dépend de la précision avec laquelle est connue la direction de référence. Dans le cas de navires, cette dernière est définie par un gyrocompas, qui du fait des évolutions du navire et en particulier dans le cas d'études sismiques tridimensionnelles, peut introduire des erreurs atteignant le degré. C'est pourquoi certains systèmes de radionavigation, comme celui décrit dans la demande internationale WO 84/03153, proposent des dispositifs de détermination de position directe et absolue, excluant les capteurs magnétiques.

Dans le cadre de systèmes conservant l'utilisation de capteurs magnétiques, il est bien entendu exclu de rendre le deuxième objet mobile autonome, c'est-à-dire capable d'établir et de communiquer lui-même sa position à tout autre mobile, en raison du coût prohibitif et de la quasi impossibilité matérielle ou technique, lorsque ce deuxième objet mobile de faible flottabilité ne peut supporter d'installations volumineuses et pesantes. Cette difficulté est en particulier d'autant plus accrue lors de la présence d'une pluralité de deuxièmes objets mobiles non autonomes, comme dans le cas de la prospection géophysique marine multi-câbles de prospection remorqués, connue sous la dénomination anglosaxonne de prospection "multistreamer".

Dans le cas d'emploi d'un système de radionavigation de type circulaire à mobiles actifs, le nombre de mobiles acceptables est limité et le système doit être configuré pour accepter ces mobiles, ce qui n'est pas toujours possible d'où des limitations très sévères.

L'invention a pour objet de remédier aux inconvénients précités par la mise en oeuvre d'un procédé et d'un système de localisation et d'orientation d'une première direction liée à la position et l'orientation d'un premier objet mobile de type autonome et d'une deuxième direction formée par un deuxième objet mobile de type non autonome et au moins un point de référence du premier objet mobile au prix d'une dépense faible de matériel de navigation.

Un autre objet de la présente invention est la mise en oeuvre d'un procédé et d'un système de localisation et d'orientation d'une première direction liée à la position et l'orientation d'un premier objet mobile de type autonome et d'une deuxième direction formée par un deuxième objet mobile non autonome et au moins un point de référence du premier objet mobile au prix de l'utilisation d'un système acoustique, optique ou radioélectrique définissant la position ou l'orientation du second mobile dans un référentiel lié au premier mobile.

Un autre objet de la présente invention est enfin la mise en oeuvre d'un procédé et d'un système de localisation et d'orientation d'une première direction liée à la position et à l'observation d'un premier objet mobile (M) de type autonome et d'une deuxième direction formée par un deuxième objet mobile de type non autonome et un point de référence du premier mobile autonome en utilisant un système de radionavigation, le procédé et le dispositif de l'invention étant totalement transparents au système de radionavigation et ne nécessitant, de ce fait, aucune modification de celui-ci.

Un objet de la présente invention est enfin la mise en oeuvre d'un procédé et d'un système de localisation et d'orientation d'une première direction formée par l'axe d'un premier objet mobile (M) de type autonome et d'un deuxième objet mobile de type non autonome de grande précision.

L'objet de l'invention le rapporte à des procédés et systèmes de localisation et de correction d'une première direction liée à la position et à l'orientation d'un premier objet mobile et d'une deuxième direction formée par un deuxième objet mobile et au moins un point de référence du premier objet mobile par rapport à un système de radionavigation de référence tels que définis dans les revendications 1, 3, 9 et 13. Ces procédés et systèmes sont remarquables en ce que, le système de radionavigation de référence fixe comportant au moins deux sources balises de référence, le premier et le deuxième objets mobiles sont munis respectivement d'une part, d'un premier moyen de communication du type radioélectrique entre le premier objet mobile et les sources balises de référence et d'un deuxième moyen de communication du type radioélectrique entre le premier et le deuxième objets mobiles et, d'autre part, d'un moyen de communication de type radioélectrique entre chaque source balise de référence et le deuxième objet mobile, tant le procédé que le système permettent, suite à la détermination de la position du premier objet mobile par rapport au système de radionavigation de référence et de l'orientation de la première direction par rapport au premier mobile (M) et à la détermination de la position du deuxième objet mobile par rapport au système de radionavigation de référence, de déterminer l'angle d'écart formé par la première et la deuxième directions en vue d'effectuer la correction d'orientation des deux directions.

L'invention trouve application à la localisation et à l'orientation d'un objet mobile maître ou autonome par rapport à une direction préférentielle définie par un ou plusieurs objets non autonomes, lesquels sont solidaires ou non en mouvement de l'objet mobile autonome,et en particulier à la localisation et/ou à la correction d'orientation relative d'un bateau remorqueur et de câbles de prospection géophysique marine remorqués, prospection géophysique marine connue sous la dénomination anglo-saxonne de prospection mono ou multi-streamer.

Elle sera mieux comprise à la lecture de la description et à l'observation des dessins ci-après dans lesquels :

- la figure 1a représente schématiquement les différentes étapes du procédé de l'invention notamment dans le cas où celui-ci est mis en oeuvre pour la localisation et/ou l'orientation d'un câble de prospection géophysique marine,
- la figure 1b représente schématiquement un protocole de localisation pour la mise en oeuvre du procédé objet de l'invention, tel que représenté en figure 1a dans le cas où le système de radionavigation est un système de radionavigation à localisation de type circulaire,
- la figure 1c représente schématiquement un protocole de localisation pour la mise en oeuvre du procédé objet de l'invention, tel que représenté en figure 1a dans le cas où le système de radionavigation est un système de radionavigation à localisation de type hyperbolique.
- La figure 2a représente un schéma synoptique d'un système permettant avantageusement la mise en oeuvre du procédé objet de l'invention tel que défini en liaison avec les figures 1a et 1b,
- la figure 2b représente un schéma synoptique d'un système permettant avantageusement la mise en oeuvre du procédé objet de l'invention, tel que défini en liaison avec les figures 1a et 1b.

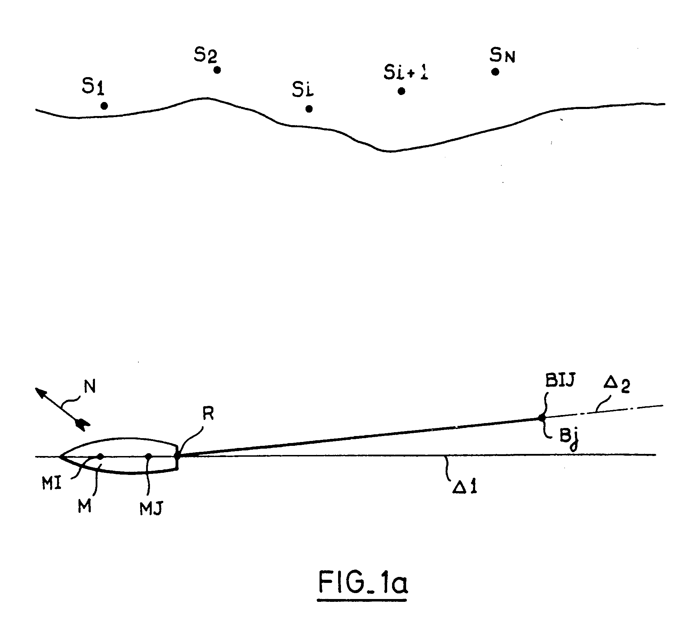

Le procédé objet de l'invention sera tout d'abord décrit en liaison avec la figure 1a.

Sur la figure 1a précitée, une première direction notée $\Delta 1$ est liée à la position et l'orientation d'un premier objet mobile autonome noté M. Une deuxième direction est formée par un deuxième objet mobile noté Bj, non autonome, et au moins un point de référence R du premier objet mobile M. De manière avantageuse non limitative, le premier objet mobile M peut être constitué par un bateau remorquant par exemple un câble de prospection géophysique marine, le câble de prospection s'étendant à l'arrière du bateau selon une direction déterminée. La direction correspondant au déploiement du câble peut être représentée par la direction $\Delta 1$ précitée ou première direction. Cette direction peut de manière classique, être déterminée au moyen des compas disposés régulièrement sur le câble de prospection par rapport à la direction du nord notée N. La direction $\Delta 1$ correspond ainsi à la direction mesurée du câble de prospection et non pas, en raison des erreurs de mesure inhérentes aux compas utilisés pour déterminer la direction de déploiement du câble, à la direction réelle de celui-ci. En particulier, pour des câbles de prospection dont la longueur peut atteindre trois kilomètres, l'erreur de l'orientation mesurée, correspondant à la direction Δ1 par rapport à la direction effective du câble correspondant à la position vraie de celui-ci, par exemple la direction Δ2, peut facilement atteindre le degré.

Conformément au procédé de localisation et d'orientation, objet de l'invention, la localisation et la correction d'orientation de la première direction Δ1 précitée et de la deuxième direction Δ2, correspondant en fait à la direction de déploiement vraie du câble de prospection, est effectuée par rapport à un système de radionavigation de référence fixe, comportant au moins deux sources balises de référence, notées Si, Si + 1. Sur la figure 1a, on a représenté une pluralité de sources balises de référence, notées respectivement S1, S2, Si, Si + 1, SN.

Conformément au procédé de l'invention, le premier objet mobile M et le deuxième objet mobile Bj sont munis, respectivement, d'une part d'un premier moyen de communication noté MI entre le premier objet mobile M et les sources balises de référence Si, Si + 1, ainsi que d'un deuxième moyen de communication noté Mj entre le premier objet mobile M et le deuxième objet mobile Bj. D'autre part, le deuxième objet mobile Bj est muni d'un moyen de communication noté BIJ entre chaque source balise de référence, Si, Si + 1 et le deuxième objet mobile Bj.

Selon une caractéristique avantageuse du procédé objet de l'invention, celui-ci consiste à déterminer la position du premier objet mobile M, par rapport au système de radionavigation de référence, constitué par les sources balises de référence Si, Si + 1 et l'orientation de la première direction relative au premier objet mobile M. Ainsi que précédemment décrit, l'orientation de la première direction Δ1, relative au premier objet mobile M, peut être effectuée au moyen des compas disposés régulièrement sur toute la longueur des câbles de prospection.

La position du deuxième objet mobile Bj, le deuxième objet mobile étant constitué par exemple par l'extrémité du câble de prospection, est ensuite déterminée par rapport au système de radionavigation de référence. L'angle d'écart formé par la première et la deuxième direction, respectivement Δ1, Δ2 est alors déterminé en vue d'effectuer la correction d'orientation de la première direction Δ1 par rapport à la deuxième direction Δ2.

Le procédé objet de l'invention, tel que défini précédemment, permet ainsi en raison de la localisation précise de l'extrémité du câble de prospection géophysique constituant le deuxième objet mobile Bj, d'obtenir une très grande précision de localisation effective du câble de prospection par rapport à la position mesurée de celui-ci, par rapport à une direction de référence habituelle, telle que la direction du Nord, notée N sur la figure 1a.

Bien entendu, on comprendra que dans le procédé objet de l'invention, le premier objet mobile M est constitué par un bateau remorquant un câble de prospection et le deuxième objet mobile noté Bj est constitué par la bouée de queue du câble de prospection géophysique marine remorqué par ce bateau.

Le procédé objet de l'invention sera tout d'abord décrit selon une variante avantageuse de réalisation non limitative, dans le cas où le système de radionavigation de référence est constitué par un système de radionavigation à localisation de type circulaire. Dans ce cas, le procédé, conformément à l'invention, relativement aux étapes consistant à déterminer la position du premier objet mobile M par rapport au système de radionavigation, puis à déterminer la position du deuxième objet mobile Bj par rapport à ce même système de radionavigation de référence, consiste à effectuer un protocole de localisation ci-après.

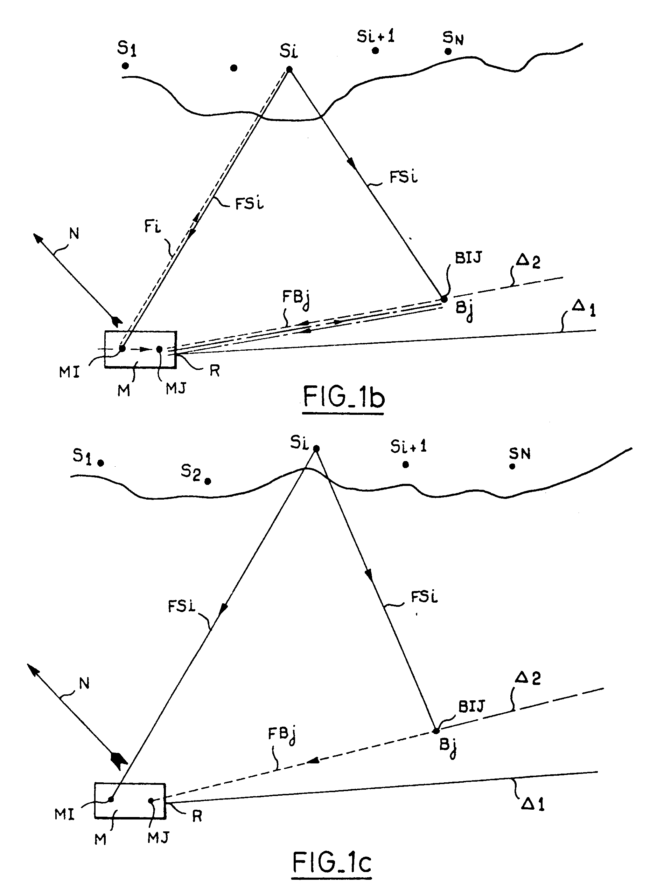

Le protocole de localisation dans le cas précité, peut consister à interroger au moyen du premier moyen de communication MI, chacune des sources balises de référence notées Si, Si + 1 ou une pluralité de celles-ci, pour établir, à partir des temps de trajet aller-retour entre le mobile M et chacune des sources balises de référence Si, Si + 1 interrogées, les distances successives $\overline{MSi}$ séparant le premier mobile M de chacune des sources balises de référence Si, Si + 1. La position du premier mobile M est alors déterminée à partir des positions des sources balises de référence notées Si, Si + 1. Sur la figure 1b, on a noté Fi la fréquence du signal d'interrogation de chacune des sources Si par les moyens de communication MI. La fréquence d'émission de chaque source Si étant notée FSi.

Simultanément à la réception des signaux d'émission de fréquence FSi émis par la source balise correspondante Si, ce même signal d'émission est en outre reçu au moyen du moyen de communication BIJ du deuxième objet mobile Bj, le signal d'émission de fréquence FSi, FSi + 1 étant émis en réponse à l'interrogation par la source balise de référence considérée. Le signal d'émission reçu par les moyens de communication BIJ précédemment cités est en outre retransmis par l'intermédiaire du deuxième moyen de communication MJ du mobile M par exemple, au premier mobile M de façon à déterminer, à partir de l'instant d'interrogation noté Ti de chacune des sources balises de référence Si, le trajet en circuit fermé noté M, Si, Bj,M. Ce trajet est formé par les distances élémentaires $\overline{MSi}$, $\overline{SiBj}$, $\overline{BjM}$, séparant respectivement le premier objet mobile M, la source balise de référence Si considérée et le deuxième objet mobile Bj.

Conformément au protocole de localisation représenté en figure 1b, une interrogation au moyen du deuxième moyen de communication MJ du deuxième objet mobile Bj permet de déterminer la distance séparant le point R du premier objet mobile M du deuxième objet mobile Bj. La distance séparant le deuxième objet mobile Bj d'au moins deux sources de balises de référence notées Si, Si + 1, distance notée $\overline{SiBj}$, $\overline{Si+1Bj}$ est déterminée par le calcul de la différence entre les distances des trajets en circuit fermé correspondantes, distances notées $\overline{MSiBjM}$, $\overline{MSi+1BjM}$ et la distance notée $\overline{MBj}$.

La position du deuxième objet mobile Bj par localisation de type circulaire par rapport au système de radionavigation de référence, peut alors être déterminée à partir des distances notées $\overline{SiBj}$, $\overline{Si+1Bj}$ séparant le deuxième objet mobile Bj des sources balises de référence d'ordre i, i + 1.

Conformément à une caractéristique avantageuse du procédé objet de l'invention, la retransmission au premier mobile M du signal d'émission de fréquence FSi, reçu par le moyen de communication BIJ par l'intermédiaire du deuxième moyen de communication MJ et/ou l'interrogation du deuxième objet mobile Bj au moyen du deuxième moyen de communication MJ, peuvent être effectuées à faible puissance et à une fréquence porteuse de valeur différente de la fréquence d'émission FSi, FSi + 1 des source balises de référence Si, Si + 1.

Le procédé objet de l'invention sera en outre décrit selon une variante avantageuse non limitative, dans le cas où le système de radionavigation de référence est constitué par un système de radionavigation à localisation de type hypyerbolique, tel que représenté en figure 1c.

Sur cette figure, les mêmes références représentent sensiblement les mêmes éléments que dans le cas de la figure 1b avec bien entendu des adaptations nécessaires en vue d'un fonctionnement avec un système de radionavigation à localisation de type hyperbolique. Conformément à la figure 1c précitée, le protocole de localisation peut consister à recevoir à l'aide du premier moyen de communication MI, la séquence d'émission émise par chacune des sources balises de référence Si, Si + 1. Dans les systèmes de radionavigation à localisation de type hyperbolique, les sources balises de référence émettent séquentiellement une fréquence d'émission notée FSi, la différence de temps de trajet entre un point fixe déterminé et deux émissions successives de deux sources balises de référence Si, Si + 1, pouvant être déterminée par un récepteur situé au niveau du point fixe précité. La séquence d'émission émise par chacune des sources balises de référence Si, Si + 1, permet d'établir la différence de distance notée

$\overline{MSi-MSi+1}$, entre la distance du premier mobile M à une première source balise de référence Si et la distance du premier mobile M à une deuxième source balise de référence Si + 1, et ce, pour une pluralité N de sources balises de référence par exemple. La position du point R du premier mobile M peut alors être déterminée par rapport aux positions des sources balises de référence Si, Si + 1. Simultanément à la réception du signal d'émission de fréquence FSi de la source balise de référence Si, le protocole de localisation consiste en outre à recevoir au moyen du moyen de communication BIJ du deuxième objet mobile Bj, la séquence d'émission émise par chaque source balise de référence Si, Si + 1. En outre, un signal de réponse à l'émission de fréquence FSi de chaque source balise de référence Si est retransmis au moyen du moyen de communication BIJ au premier mobile M en vue de déterminer la distance du trajet composite Si, Bj, M, constituée par chaque distance élémentaire notée $\overline{SiBj}$, $\overline{BjM}$ et $\overline{Si+1Bj,BjM}$ entre chaque source balise de référence Si, le deuxième et le premier objets mobiles Bj, M, respectivement.

La position du deuxième objet mobile Bj par localisation de type hyperbolique par rapport au système de radionavigation de référence, peut alors être déterminée à partir de la différence des distances notée $\overline{SiBj-Si+1Bj}$ séparant le deuxième objet mobile Bj des sources balises de référence Si, Si + 1. Bien entendu, on comprendra que la localisation peut en fait être effectuée par rapport à une source balise de référence déterminée, telle que la source S1 par exemple, la description de la localisation par rapport à la source Si d'ordre i ayant été donnée à titre d'exemple, afin de ne pas nuire à la généralité du protocole de localisation précédemment décrit.

Selon un mode de réalisation avantageux du procédé objet de l'invention, la retransmission au moyen du moyen de communication BIJ au premier mobile M d'un signal de réponse à l'émission de chaque source balise de référence Si peut être effectuée à faible puissance et à une fréquence porteuse de valeur différente des fréquences d'émission FSi des sources balises de référence Si engendrant la séquence d'émission. De manière classique, la retransmission est synchronisée sur la séquence d'émission, la retransmission pouvant être effectuée entre les périodes d'émission de chaque source balise de référence Si par exemple.

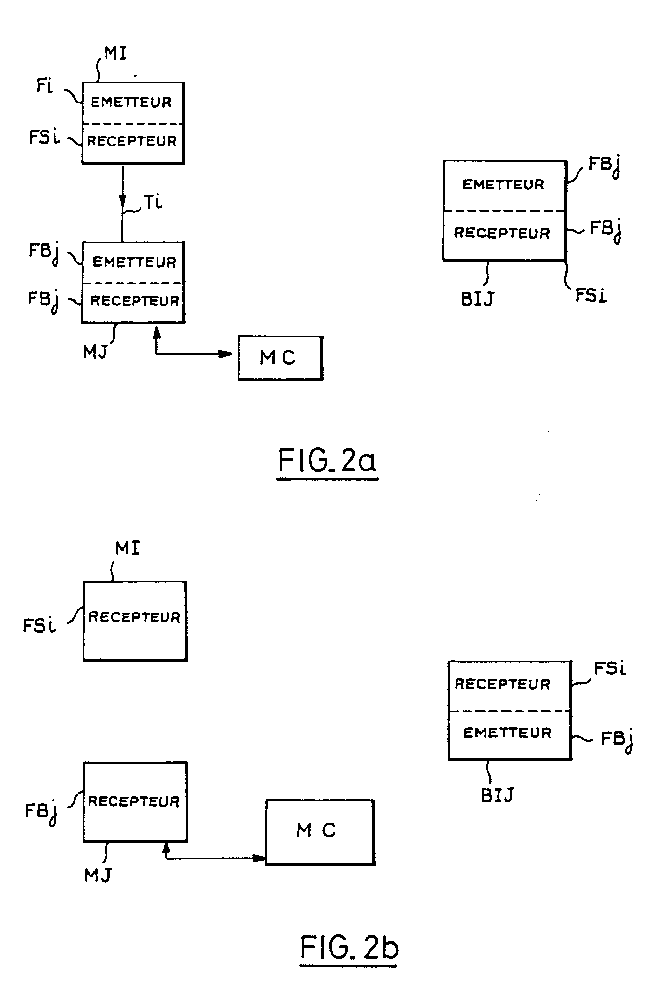

Le procédé objet de l'invention tel que décrit précédemment, tant dans le cas de l'utilisation d'un système de radionavigation à localisation de type circulaire ou de type hyperbolique n'est bien entendu pas limité à la localisation et à l'orientation d'une première direction liée à l'axe d'un premier objet mobile M, et d'une deuxième direction. Il peut être utilisé notamment, de manière avantageuse, afin d'effectuer également la localisation et l'orientation d'une première direction liée à l'orientation d'un premier objet mobile M et d'une direction préférentielle parmi une pluralité de deuxièmes directions formées par une pluralité de deuxièmes objets mobiles Bj et au moins un point de référence du premier objet mobile M. Dans ce cas, chaque deuxième objet mobile Bj est muni d'un moyen de communication BIJ entre chaque source balise de référence Si, Si + 1, et chaque deuxième objet mobile Bj. Le premier objet mobile M est muni d'un deuxième moyen de communication MJ entre le premier objet mobile M et chacun des deuxièmes objets mobiles Bj. La direction préférentielle précitée peut, avantageusement, être constituée par la direction moyenne de l'ensemble des deuxièmes objets mobiles Bj par rapport au point de référence des premiers objets mobiles. Un système de localisation et d'orientation permettant la mise en oeuvre du procédé objet de l'invention, sera maintenant décrit en liaison avec les figures 2a et 2b.

De manière générale, le système de localisation et d'orientation d'une première direction liée à la position et à l'orientation d'un premier objet mobile autonome M et d'une deuxième direction formée par un deuxième objet mobile BJ non autonome, et au moins un point de référence du premier objet mobile M par rapport à un système de radionavigation fixe comportant au moins deux sources balises de référence Si, Si + 1, est agencé, lorsque le système de radionavigation est un système de radionavigation à localisation de type circulaire de façon que le premier objet mobile M comporte un premier moyen de communication MI permettant l'interrogation de chacune des sources balises de référence Si, Si + 1 ou d'une pluralité de celles-ci. Le premier objet mobile M comporte en outre un deuxième moyen de communication noté MJ, Permettant d'interroger le deuxième objet mobile Bj pour déterminer la distance séparant le premier M du deuxième BJ objet mobile. Sur la figure 2a, on a représenté le premier moyen de communication MI et le deuxième moyen de communication MJ, les moyens de communication précités étant respectivement émetteurs à la fréquence Fi, qui est la fréquence du signal d'interrogation de chaque source Si, et récepteur à la fréquence FSi qui est la fréquence du signal d'émission de chacune des sources balises de référence Si. Le moyen de communication MJ est émetteur et récepteur à une fréquence d'émission et de réception différente de la fréquence d'émission FSi des sources balises de référence Si. Les fréquences d'émission et de réception des moyens de communication MJ peuvent avantageusement être identiques et représentées par la fréquence FBj. En outre, conformément à la figure 2a, le système de localisation et d'orientation comporte avantageusement au niveau du deuxième objet mobile Bj, un moyen de communication BIJ entre chaque source balise de référence Si, Si + 1 et le deuxième objet mobile Bj. Le moyen de communication BIJ permet la réception du signal d'émission à fréquence FSi de chaque source balise de référence Si, Si + 1, et la retransmission à fréquence déterminée vers les deuxièmes moyens de communication MJ du premier mobile M d'un signal de réponse au signal d'émission FSi, reçu par le moyen de communication BIJ. Le moyen de communication BIJ est ainsi émetteur à la fréquence FBj pour assurer la retransmission du signal de réponse au signal d'émission FSi et récepteur d'une part à la fréquence d'émission FSi de chaque source d'émission Si et d'autre part, à la fréquence FBj d'émission du deuxième moyen de communication MJ du premier mobile M. Le système comprend au niveau du premier mobile M, des moyens de calcul notés MC, des distances $\overline{MSi}$, $\overline{SiBj}$ séparant le premier objet mobile M et le deuxième objet mobile Bj de chaque source Si, Si + 1, et des moyens de calcul de la position des premier et deuxième objets mobiles par rapport au système de radionavigation de référence, ainsi que de l'orientation de la deuxième direction par exemple. Les premier et deuxième moyens de communication MI, MJ du premier mobile M sont bien entendu synchronisés afin, pour le deuxième moyen de communication MJ, de recevoir la référence de temps de l'instant d'interrogation noté Ti de chacune des sources balises de référence Si. Sur l'ensemble des dessins, on a représenté les premier et deuxième moyens de communication MI, MJ, physiquement séparés afin de permettre une bonne compréhension de la présente description ; les moyens précités peuvent bien entendu être physiquement confondus. Les moyens de calcul de distance, de position et d'orientation peuvent bien entendu être constitués par les appareils de navigation du mobile M, et par un calculateur associé. On remarquera en outre que le deuxième moyen de communication MJ du premier mobile M, assurant l'interrogation du deuxième mobile BJ et les moyens de communication BIJ permettant la retransmission au premier mobile M du signal de réponse à l'interrogation FSi, peuvent travailler de manière avantageuse à la même fréquence porteuse notée FBj. Le deuxième moyen de communication MJ et le moyen de communication BIJ précités peuvent alors opérer à faible puissance et à une fréquence porteuse FBj différente de la fréquence du signal d'émission de fréquence FSi de chaque source balise de référence Si, Si + 1.

Un autre mode de réalisation avantageux d'un système de localisation et d'orientation d'une première direction liée à la position et à l'orientation d'un premier objet mobile autonome M et d'une deuxième direction formée par un deuxième objet mobile non autonome Bj et au moins un point de référence du premier objet mobile autonome M, par rapport à un système de radionavigation de référence fixe, sera maintenant décrit dans le cas où le système de radionavigation est un système à localisation de type hyperbolique, ainsi que représenté en figure 2b.

Dans ce cas, le premier objet mobile peut comporter un premier moyen de communication noté MI, permettant la réception des signaux de fréquence FSi, FSi + 1 délivrés par chacune des sources balises de référence Si, Si + 1, selon une séquence d'émission déterminée. Sur la figure 2b, le premier moyen de communication MI est récepteur à la fréquence FSi de chacune des sources balises Si. Le deuxième objet mobile Bj comporte un moyen de communication BIJ, permettant successivement la réception des signaux d'émission de fréquence FSi, FSi + 1 délivrés par chacune des sources balises de référence Si, Si + 1 et la retransmission d'un signal de réponse de fréquence FBj à l'émission des signaux de fréquence FSi, FSi + 1. Sur la figure 2b, le moyen de communication BIJ est représenté récepteur à la fréquence FSi et émetteur à la fréquence FBj de retransmission.

Le premier objet mobile M comporte en outre un deuxième moyen de communication MJ permettant de recevoir le signal de réponse de fréquence FBj émis par les moyens de communication BIJ en réponse à l'émission des signaux de fréquence FSi, FSi + 1 émis par les sources balises de référence Si, Si + 1.

Bien entendu, le système de localisation et d'orientation objet de l'invention, ainsi que représenté en figure 2b comporte en outre au niveau du premier mobile M, des moyens de calcul notés MC des différences de distance notées $\overline{MSi\text{-}MSi+1}$, entre la distance du premier mobile M à une première source balise de référence Si, et la distance du premier mobile M à une deuxième source balise de référence Si + 1. Les moyens de calcul précités permettent d'effectuer ce calcul pour une pluralité N de sources balises de référence Si. Ils permettent également d'effectuer le calcul des différences de distance $\overline{SiBj\text{-}Si+1,\ Bj}$ séparant le deuxième objet mobile Bj des sources balises de référence Si, Si + 1. Les moyens de calcul MC permettent également le calcul de la position des premier M et deuxième Bj objets mobiles par rapport au système de radionavigation de référence et de l'orientation de la deuxième direction par rapport à la première direction par exemple.

Ainsi que précédemment décrit dans le cas de l'utilisation d'un système ce radionavigation à localisation circulaire, le moyen de communication BIJ lorsqu'il assure la retransmission au premier mobile M du signal de réponse à l'émission en séquence d'émission de chaque source balise de référence Si, Si + 1 peut avantageusement opérer à faible puissance et à une fréquence porteuse FBj différente de la fréquence FSi, FSi + 1 d'émission de chacune des sources Si, Si + 1.

Dans les modes de réalisation des systèmes permettant la mise en oeuvre du procédé objet de l'invention, tel que représenté en figures 2a et 2b, le moyen de communication BIJ du deuxième objet mobile Bj permettant la réception du signal d'émission à fréquence FSi de chaque source balise de référence Si, Si + 1 et la retransmission vers le deuxième moyen de communication MJ du premier objet mobile M, comprend par exemple un répondeur.

On comprendra en outre que le premier objet mobile M dans le cas d'une utilisation du système objet de l'invention pour la prospection géophysique marine au moyen d'un câble remorqué est constitué par un bateau remorquant le câble de prospection et le deuxième objet mobile BJ peut avantageusement être constitué par la bouée de queue du câble de prospection géophysique marine remorqué par le bateau. Bien entendu, le système peut comporter une pluralité de deuxièmes objets mobiles, chacun constitué par la bouée de queue d'une pluralité de câbles de prospection géophysique marine remorqués par le bateau.

Les moyens de calcul précédemment cités peuvent être constitués par le calculateur intégré au navire.

De manière avantageuse, la mise en oeuvre du système de localisation et de correction d'orientation objet de l'invention pourra être réalisée au moyen du système SYLEDIS commercialisé par la Société d'Etudes, Recherches et Constructions Electroniques SERCEL. Ce système a fait l'objet d'une demande de brevet français publiée sous le numéro 2 248 517. En particulier, les moyens de communication BIJ et MJ peuvent être constitués par des radiobalises ou répondeurs de type SB5. Ce type de balise permet de localiser simultanément avec un premier mobile M tel un bateau remorquant plusieurs câbles de prospection géophysique huit deuxièmes objets mobiles Bj dans le cas où deux sources balises de référence Si, Si + 1 sont utilisées, six deuxièmes objets mobiles dans le cas où trois sources balises de référence sont utilisées.

Si NS est le nombre de sources balises de référence à terre et NB le nombre d'objets à localiser, la relation limitant NB et NS est donnée par :
2 + NB + NS + NB x NS ≤ 30.
Si

| | |
|---|---|
| NB = 2 | NS ≤ 8 |
| NB = 3 | NS ≤ 6 |
| NB = 4 | NS ≤ 4 |

NB = 5 à 7    NS ≤ 3
NB = 8    NS ≤ 2

Dans tous les cas, aucune modification du réseau de radionavigation de référence n'est nécessaire.

Le procédé de localisation et d'orientation d'une première direction liée à la position et à l'orientation d'un premier objet mobile autonome et d'une deuxième direction formée par un deuxième objet mobile non autonome et au moins un point de référence du premier objet mobile, par rapport à un système de radionavigation de référence fixe comportant au moins deux sources balises de référence, objet de la présente invention, n'est bien entendu pas limité à des applications du type sismique marine, dans lesquelles l'objet mobile autonome M est formé par un bateau et l'objet mobile non autonome, constitué par la bouée de queue du câble de prospection, est mécaniquement rattaché à l'objet mobile autonome M. Ainsi, par objet mobile non autonome, on peut également comprendre tout objet mobile non solidaire en mouvement de l'objet mobile autonome ; les objets mobiles non autonomes sont alors constitués par un ou plusieurs objets mobiles, tels que des bateaux, se déplaçant ou navigant de concert avec l'objet mobile autonome constitué par un bateau maître. Les objets mobiles non autonomes sont alors munis de répondeurs constituant moyens d'interconnexion BIJ, le caractère non autonome de ces mobiles ou bateaux leur étant alors conféré par la seule dépendance du point de vue moyens de traitement ou de calcul de position et d'orientation du mobile ou bateau autonome M.

## Revendications

1. Procédé de localisation et d'orientation d'une première direction liée à la position et à l'orientation d'un premier objet mobile autonome (M) et d'une deuxième direction formée par un deuxième objet mobile (Bj) non autonome et au moins un point de référence du premier objet mobile par rapport à un système de radionavigation de référence fixe comportant au moins deux sources balises de référence (Si, Si + 1), le premier (M) et deuxième (Bj) objet mobile étant munis respectivement, d'une part, d'un premier moyen de communication (MI) du type radioélectrique entre le premier objet mobile (M) et les sources balises de référence (Si, Si + 1) et d'un deuxième moyen de communication (MJ) du type radioélectrique entre le premier (M) et le deuxième (Bj) objet mobile et, d'autre part, d'un moyen de communication (BIJ) du type radioélectrique entre chaque source balise de référence (Si, Si + 1) et le deuxième objet mobile (Bj), procédé consistant :

a) à déterminer la position du premier objet mobile (M) par rapport au système de radionavigation de référence et l'orientation de la première direction par rapport au premier objet mobile (M),

b) à déterminer la position du deuxième objet mobile (Bj) par rapport au système de radionavigation de référence,

c) à déterminer l'angle d'écart formé par la première et la deuxième direction , en vue d'effectuer la correction d'orientation de la première direction par rapport à la deuxième direction, caractérisé en ce que ledit système de radionavigation de référence, étant constitué par un système de radionavigation à localisation de type circulaire, ledit procédé, relativement aux étapes a) et b) précitées, consiste à effectuer le protocole de localisation ci-après :

- interroger au moyen du premier moyen de communication (MI) chacune des sources balises de référence (Si, Si + 1), ou une pluralité d'entre elles, pour établir, à partir des temps de trajet aller-retour entre le mobile M et chacune des sources balises de référence (Si, Si + 1) interrogées, les distances successives (MSi) séparant le premier mobile (M) de chacune des sources balises de référence (Si, Si + 1),

- déterminer la position du point de référence R du premier mobile (M) à partir des positions des sources balises de référence (Si, Si + 1),

- recevoir au moyen du moyen de communication (BIJ) du deuxième objet mobile (Bj), le signal d'émission de fréquence (FSi, FSi + 1) en réponse à l'interrogation d'au moins une source balise de référence (Si, Si + 1) et à retransmettre ledit signal d'émission de fréquence (FSi, FSi + 1) reçu par ledit moyen de communication (BIJ), par l'intermédiaire dudit deuxième moyen de communication (MJ), audit premier mobile (M) de façon à déterminer, à partir de l'instant d'interrogation (Ti) de chacune des sources balises de référence (Si), le trajet $(\overline{MSiBjM})$ en circuit fermé, formé par les distances élémentaires $(\overline{MSi}, \overline{SiBj}, \overline{BjM})$ séparant respectivement le premier objet mobile (M), source balise de référence (Si), deuxième objet mobile (Bj),

- interroger au moyen dudit deuxième moyen de communication (MJ) ledit deuxième objet mobile (Bj) pour déterminer la distance séparant le point de référence du premier objet mobile (M) du deuxième (Bj) objet mobile,

- déterminer la distance ($\overline{SiBj}$, $\overline{Si+1\ Bj}$) séparant le deuxième objet mobile (Bj) d'au moins deux sources balises de référence (Si, Si + 1) par calcul de la différence entre les distances des trajets en circuit fermé correspondantes ($\overline{MSiBjM}$), ($\overline{MSi+1BjM}$) et la distance ($\overline{MBj}$),

- déterminer la position du deuxième objet mobile (Bj) par localisation de type circulaire, par rapport au système de radionavigation de référence, à partir des distances ($\overline{SiBj}$, $\overline{Si+1Bj}$) séparant ledit deuxième objet mobile des sources balises de référence d'ordre i, i + 1.

2. Procédé selon la revendication 1, caractérisé en ce que la retransmission audit premier mobile M du signal d'émission de fréquence (FSi) reçu par ledit moyen de communication (BIJ), par l'intermédiaire dudit deuxième moyen de communication (MJ) et/ou l'interrogation du deuxième objet mobile (Bj) au moyen dudit deuxième moyen de communication (MJ) sont effectués à faible puissance et à une fréquence porteuse de valeur différente de la fréquence d'interrogation (FSi, FSi + 1) des sources balises de référence (Si),(Si + 1).

3. Procédé de localisation et d'orientation d'une première direction liée à la position et à l'orientation d'un premier objet mobile autonome (M) et d'une deuxième direction formée par un deuxième objet mobile (Bj) non autonome et au moins un point de référence du premier objet mobile par rapport à un système de radionavigation de référence fixe comportant au moins deux sources balises de référence (Si, Si + 1) le premier (M) et deuxième (Bj) objet mobile étant munis respectivement, d'une part, d'un premier moyen de communication (MI) du type radioélectrique entre le premier objet mobile (M) et les sources balises de référence (Si, Si + 1) et d'un deuxième moyen de communication (MJ) du type radioélectrique entre le premier (M) et le deuxième (Bj) objet mobile et, d'autre part, d'un moyen de communication (BIJ) du type radioélectrique entre chaque source balise de référence (Si, Si + 1) et le deuxième objet mobile (Bj), procédé consistant :

a) à déterminer la position du premier objet mobile (M) par rapport au système de radionavigation de référence et l'orientation de la première direction par rapport au premier objet mobile (M),

b) à déterminer la position du deuxième objet mobile (Bj) par rapport au système de radionavigation de référence,

c) à déterminer l'angle d'écart formé par la première et la deuxième direction, en vue d'effectuer la correction d'orientation de la première direction par rapport à la deuxième direction, caractérisé en ce que ledit système de radionavigation de référence, étant constitué par un système de radionavigation à localisation de type hyperbolique, ledit procédé relativement aux étapes a) et b) précédentes, consiste à effectuer le protocole de localisation ci-après :

- recevoir, à l'aide du premier moyen de communication (MI), la séquence d'émission émise par chacune des sources balises de référence (Si), (Si + 1) pour établir la différence de distance ($\overline{MSi}$ - $\overline{MSi+1}$) entre la distance du premier mobile (M) à une première source balise de référence (Si) et la distance du premier mobile (M) à une deuxième source balise de référence (Si + 1) et ce pour une pluralité N de sources balises de référence (Si),

- à déterminer la position du point de référence du premier mobile (M) à partir des positions des sources balises de référence (Si, Si + 1),

- recevoir au moyen du moyen de communication (BIJ) du deuxième objet mobile (Bj), ladite séquence d'émission émise par chacune des sources balises de référence (Si), (Si + 1) et retransmettre au moyen dudit moyen de communication (BIJ) audit premier mobile (M) un signal de réponse à l'émission de fréquence (FS) de chaque source balise de référence (Si) pour déterminer la distance du trajet composite (Si, Bj,M) constitué par chaque distance élémentaire ($\overline{SiBj}$, $\overline{BjM}$) ; ($\overline{Si+1\ Bj}$, $\overline{BjM}$) entre chaque source balise de référence (Si), le deuxième (Bj) et premier (M) objets mobiles,

- déterminer la position du deuxième objet mobile (Bj) par localisation de type hyperbolique par rapport au système de radionavigation de référence à partir de la différence des distances ($\overline{SiBj}$ - $\overline{Si+1\ Bj}$) séparant ledit deuxiè-

me objet mobile Bj des sources balises de référence (Si), (Si + 1).

4. Procédé selon la revendication 3, caractérisé en ce que la retransmission au moyen dudit deuxième moyen de communication (BIJ) au premier mobile (M) d'un signal de réponse à l'émission de chaque source balise de référence (Si) est effectuée à faible puissance et à une fréquence porteuse de valeur différente des fréquences d'émission (FSi) des sources balises de référence (Si) engendrant la séquence d'émission.

5. Procédé selon la revendication 4, caractérisé en ce que ladite retransmission est synchronisée sur ladite séquence d'émission, ladite retransmission étant effectuée entre les périodes d'émission de chaque source balise de référence (Si).

6. Procédé selon l'une des revendications 1 à 5, caractérisé en ce que ledit premier objet mobile est constitué par un bateau, remorquant un câble de prospection géophysique marine, le deuxième objet mobile étant constitué par la bouée de queue de ce même câble.

7. Procédé selon l'une des revendications 1 à 6, caractérisé en ce que en vue de permettre la localisation et l'orientation d'une première direction liée à la position et à l'orientation d'un premier objet mobile (M) et et d'une deuxième direction préférentielle parmi une pluralité de deuxièmes directions formées par une pluralité de deuxièmes objets mobiles (Bj) et au moins un point de référence du premier objet mobile (M), chaque deuxième objet mobile (Bj) est muni d'un moyen de communication (BIJ) du type radioélectrique entre chaque source balise de référence (Si, Si + 1) et chaque deuxième objet mobile (Bj), ledit premier objet mobile (M) étant muni d'un deuxième moyen de communication (MJ) du type radioélectrique entre le premier (M) et chacun des deuxièmes (Bj) objets mobiles.

8. Procédé selon la revendication 7, caractérisé en ce que ladite direction préférentielle est la direction moyenne de l'ensemble des deuxièmes objets (Bj) par rapport au point de référence du premier objet mobile.

9. Système de localisation et d'orientation d'une première direction liée à la position et l'orientation d'un premier objet mobile autonome (M) et d'une deuxième direction formée par un deuxième objet mobile (M) non autonome et au moins un point de référence du premier objet mobile (M) par rapport à un système de radionavigation de référence fixe comportant au moins deux sources balises de référence (Si, Si + 1), caractérisé en ce que ledit système de radionavigation étant un système de radionavigation à localisation de type circulaire, ledit premier objet mobile (M) comporte :
- un premier moyen de communication (MI) du type radioélectrique pour assurer l'interrogation de chacune des sources balises de référence (Si, Si + 1), ou d'une pluralité d'entre elles,
- un deuxième moyen de communication (MJ) du type radioélectrique pour assurer l'interrogation dudit deuxième objet mobile (Bj) pour déterminer la distance séparant le premier (M) du deuxième (Bj) objet mobile, ledit deuxième objet mobile (Bj) comportant :
- un moyen de communication (BIJ) du type radioélectrique entre chaque source balise de référence (Si, Si + 1) et le deuxième objet mobile (Bj), ledit moyen de communication (BIJ) assurant la réception du signal d'émission à fréquence (FSi) de chaque source balise de référence (Si, Si + 1) et la retransmission à fréquence (FBj) vers lesdits deuxièmes moyens de communication (MJ) du premier mobile (M) d'un signal de réponse au signal d'émission (FSi) reçu par ledit moyen de communication (BIJ), ledit système comportant en outre au niveau du mobile (M),
- des moyens de calcul des distances ($\overline{MSi}$), ($\overline{SiBj}$) séparant le premier (M) objet mobile et deuxième (Bj) objet mobile de chaque source (Si),(Si + 1), à partir des temps de trajet aller-retour,
- des moyens de calcul, du type à localisation circulaire, de la position desdits premier (M) et deuxième (Bj) objets mobiles par rapport au système de radionavigation de référence et de l'orientation de la deuxième direction par rapport à la première direction, lesdits moyens de calcul de position utilisant les distances précédemment déterminées.

10. Système selon la revendication 9, caractérisé en ce que ledit premier (MI) et deuxième (MJ) moyens de communication du premier mobile (M) assont synchronisés.

11. Système selon l'une des revendications 9 ou 10, caractérisé en ce que le deuxième moyen de communication (MJ) du premier mobile (M) assurant l'interrogation dudit deuxième mobile (Bj) et les moyens de communication (BIJ) assurant la retransmission (MJ) du premier mobile (M) du signal de réponse à l'interrogation (FSi) travaillent à la même fréquence porteuse (FBj).

12. Système selon la revendication 11, caractérisé en ce que ledit moyen de communication (BIJ) lorsqu'il assure la retransmission audit premier mobile (M) du signal de réponse au signal d'émission de fréquence (FSi) et ledit deuxième moyen de tercommunication (MJ) du mobile (M) opèrent à faible puissance et à une fréquence porteuse (FBj) différente de la fréquence du signal d'émission de fréquence (FSi) de chaque source balise de référence (Si, Si + 1).

13. Système de localisation et d'orientation d'une première direction liée à la position et à l'orientation d'un premier objet mobile autonome (M) et d'une deuxième direction formée par un deuxième objet mobile (Bj) non autonome et au moins un point de référence du premier objet mobile (M) par rapport à un système de radionavigation de référence fixe comportant au moins deux sources balises de référence (Si, Si + 1), caractérisé en ce que ledit système de radionavigation étant un système de radionavigation à localisation de type hyperbolique, ledit premier objet mobile (M) comporte :
   - un premier moyen de communication (MI) du type radioélectrique pour assurer la réception des signaux de fréquence (FSi, FSi + 1) délivrés par chacune des sources balises de référence (Si, Si + 1) selon une séquence d'émission déterminée, ledit deuxième objet mobile (Bj) comportant un moyen de communication (BIJ) du type radioélectrique pour assurer successivement la réception des signaux d'émission de fréquence (FSi), (FSi + 1) délivrés par chacune des sources balises de référence (Si, Si + 1) et la retransmission d'un signal de réponse de fréquence (FBj) à l'émission des signaux de fréquence (FSi), (FSi + 1), ledit premier mobile (M) comportant en outre :
   - un deuxième moyen de communication (MJ) du type radioélectrique assurant la réception du signal de réponse de fréquence (FBj) émis par les moyens de communication (BIJ) en réponse à l'émission des signaux de fréquence (FSi, FSi + 1) émis par les sources balises de référence (Si)(Si + 1), ledit système comportant en outre, au niveau du premier mobile (M)
   - des moyens de calcul des différences de distance ($\overline{MSi\text{-}MSi + 1}$) entre la distance du premier mobile (M) à une première source balise de référence (Si) et la distance du premier mobile (M) à une deuxième source balise de référence (Si + 1), pour une pluralité N de sources balises de référence (Si), des différences de distance ($\overline{SiBj - Si + 1Bj}$) séparant le deuxième objet mobile (Bj) des sources balises de référence (Si), (Si + 1),
   - des moyens de calcul, du type à localisation hyperbolique, de la position desdits premier (M) et deuxième (Bj) objets mobiles par rapport au système de radionavigation de référence et de l'orientation de la deuxième direction par rapport à la première direction, lesdits moyens de calcul de position utilisant les différences de temps séparant le premier, respectivement le deuxième objet des sources balises de référence.

14. Système selon la revendication 13, caractérisé en ce que ledit moyen d'intercommunication (BIJ) lorsqu'il assure la retransmission audit premier mobile (M) du signal de réponse à l'émission en séquence d'émission de chaque source balise de référence (Si), (Si + 1) opère à faible puissance et à une fréquence porteuse (FBj) différente de la fréquence (FSi),(FSi + 1) d'émission de chacune des sources (Si,Si + 1).

15. Système selon l'une des revendications 9 à 14, caractérisé en ce que ledit moyen de communication (BIJ) dudit deuxième objet mobile (Bj) assurant la réception du signal d'émission à fréquence (FSi) de chaque source balise de référence (Si, Si + 1) et la retransmission vers ledit deuxième moyen de communication (MJ) du premier objet mobile (M) comprend un répondeur.

16. Système selon l'une des revendications 9 à 15, caractérisé en ce que le premier objet mobile (M) est constitué par un bateau remorquant un câble de prospection géophysique marine et le deuxième objet mobile (Bj) est constitué par la bouée de queue d'un câble de prospection géophysique marine remorqué par le bateau.

17. Système selon la revendication 16, caractérisé en ce qu'il comporte une pluralité de deuxièmes objets mobiles chacun constitué par la bouée de queue d'une pluralité de câbles de prospection géophysique marines remorqués par un bateau.

**Claims**

1. Method of locating and orienting a first direction linked to the position and to the orientation of an autonomous first mobile object (M) and a second direction defined by a non-autonomous second mobile object (Bj) and at least one reference point on the first mobile object relative to a fixed reference radionavigation system comprising at least two reference beacons (Si, Si + 1), the first mobile object (M) and the second mobile object (Bj) being respectively provided, on the one hand, with first communication means (MI) of the radioelectric type providing communications between the first mobile object (M) and the reference beacons (Si, Si + 1) and second communication means (MJ) of the radioelectric type providing communications between the first mobile object (M) and the second mobile object (Bj), and, on the other hand, communication means (BIJ) of the radioelectric type providing communications between each reference beacon (Si, Si + 1) and the second mobile object (Bj), said method consisting in :

 a) determining the position of the first mobile object (M) relative to the reference radionavigation system and the orientation of the first direction relative to the first mobile object (M),

 b) determining the position of the second mobile object (Bj) relative to the reference radionavigation system,

 c) determining the angular offset between the first and second directions, with a view to correcting the orientation of the first direction relative to the second direction,

 characterized in that, said reference radionavigation system being a circular type location radionavigation system, the aforementioned steps a) and b) of said method consist in executing the following location protocol ;

 - using the first communication means (MI) to interrogate each of the reference beacons (Si, Si + 1) or a plurality of said reference beacons in order to establish from the round trip propagation time between the mobile (M) and each of the reference beacons (Si, Si + 1) interrogated the successive distances (MSi) separating the first mobile (M) from each of the reference beacons (Si, Si + 1),

 - determining the position of the reference point (R) on the first mobile (M) from the positions of the reference beacons (Si, Si + 1),

 - using the communication means (BIJ) of the second mobile object (Bj) to receive the signal of frequency (FSi, FSi + 1) transmitted in response to interrogation of at least one reference beacon (Si, Si + 1) and to retransmit said signal of frequency (FSi, FSi + 1) received by said communication means (BIJ) using said second communication means (MJ) to said first mobile (M) in order to determine from the time (Ti) at which each of the reference beacons (Si) is interrogated the length of the closed path ($\overline{MSiBjM}$) formed by the respective elementary distances ($\overline{MSi}$, $\overline{SiBj}$, $\overline{BjM}$) between the first mobile object (M), the reference beacon (Si) and the second mobile object (Bj),

 - using said second communication means (MJ) to interrogate said second mobile object (Bj) to determine the distance between the reference point on the first mobile object (M) and the second mobile object (Bj),

 - determining the distances ($\overline{SiBj}$, $\overline{Si + 1Bj}$) between the second mobile object (Bj) and at least two reference beacons (Si, Si + 1) by calculating the difference between the lengths of the corresponding closed paths ($\overline{MSiBjM}$), ($\overline{MSi + 1BjM}$) and the distance ($\overline{MBj}$),

 - determining the position of the second mobile object (Bj) relative to the reference radionavigation system by a circular type location method from the distances ($\overline{SiBj}$, $\overline{Si + 1Bj}$) separating said second mobile object from the reference beacons of rank i, i + 1.

2. Method according to claim 1, characterized in that retransmission to said first mobile (M) of the signal at frequency (FSi) received by said communication means (BIJ) by means of said second communication means (MJ) and/or interrogation of the second mobile object (Bj) by means of said second communication means (MJ) are effected at a low power level and at a carrier frequency different to the frequency (FSi, FSi + 1) at which the reference beacons (Si), (Si + 1) are interrogated.

3. Method of locating and orienting a first direction linked to the position and to the orientation of an autonomous first mobile object (M) and a second direction defined by a non-autonomous second mobile object (Bj) and at least one reference point on the first mobile object relative to a fixed reference radionavigation system comprising at least two reference beacons (Si, Si + 1), the first mobile object (M) and the second mobile object (Bj) being respectively provided, on the one hand, with first communication means (MI) of the radioelectric type providing communications between the first mobile object (M) and the reference beacons (Si, Si + 1) and second communication means (MJ) of the radioelectric type providing communications between the first mobile object (M) and the second mobile object (Bj), and, on the other hand, communication means (BIJ) of the radioelectric type providing communications between each reference beacon (Si, Si + 1) and the second mobile object (Bj), said method consisting in :

a) determining the position of the first mobile object (M) relative to the reference radionavigation system and the orientation of the first direction relative to the first mobile object (M),

b) determining the position of the second mobile object (Bj) relative to the reference radionavigation system,

c) determining the angular offset between the first and second directions, with a view to correcting the orientation of the first direction relative to the second direction,

characterized in that, said reference radionavigation system being a hyperbolic type location radionavigation system, said steps a) and b) of said method consist in executing the following location protocol:

- using the first communication means (MI) to receive the sequence transmitted by each of the reference beacons (Si), (Si + 1) to establish the difference $(\overline{MSi} - \overline{MSi + 1})$ between the distance from the first mobile (M) to a first reference beacon (Si) and the distance from the first mobile (M) to a second reference beacon (Si + 1) for a plurality N of reference beacons (Si),

- determining the position of the reference point on the first mobile (M) from the positions of the reference beacons (Si, Si + 1),

- using the communication means (BIJ) of the second mobile object (Bj) to receive said sequence sent by each of the reference beacons (Si), (Si + 1) and using said communication means (BIJ) to retransmit to said first mobile (M) a signal in response to transmission of the frequency (FS) by each reference beacon (Si) to determine the length of the composite path (Si, Bj, M) constituted by each respective elementary distance $(\overline{SiBj}, \overline{BjM})$, $(\overline{Si + 1Bj}, \overline{BjM})$ between each reference beacon (Si), the second mobile object (Bj) and the first mobile object (M),

- determining the position of the second mobile object (Bj) relative to the reference radionavigation system by a hyperbolic type location method from the difference $(\overline{SiBj} - \overline{Si + 1Bj})$ between the distances separating said second mobile object (Bj) from the reference beacons (Si), (Si + 1).

4. Method according to claim 3, characterized in that the retransmission by means of said second communication means (BIJ) to the first mobile (M) of a signal in response to transmission by each reference beacon (Si) is effected at a low power level and at a carrier frequency different to the frequencies (FSi) at which the reference beacons (Si) generating the transmit sequence transmit.

5. Method according to claim 4, characterized in that said retransmission is synchronized to said transmit sequence and is effected between the periods in which each reference beacon (Si) transmits.

6. Method according to any one of claims 1 through 5, characterized in that said first mobile object is a ship towing a marine geophysical prospecting cable and the second mobile object is a buoy at the trailing end of said cable.

7. Method according to any one of claims 1 through 6, characterized in that with a view to enabling location and orientation of a first direction linked to the position and to the orientation of a first mobile object (M) and of a preferred second direction from a plurality of second directions defined by a plurality of second mobile objects (Bj) and at least one reference point on the first mobile object (M), each second mobile object (Bj) is provided with communication means (BIJ) providing communication between each reference beacon (Si, Si + 1) and each second mobile object (Bj) and said first mobile object (M) is provided with second communication means (MJ) providing communication between said first mobile object (M) and each second mobile object (Bj).

8. Method according to claim 7, characterized in that said preferred direction is the mean direction for the set of second objects (Bj) relative to the reference point on the first mobile object.

9. System for locating and orienting a first direction linked to the position and the orientation of an autonomous first mobile object (M) and a second direction defined by a non-autonomous second mobile object (M) and at least one reference point on the first mobile object (M) relative to a fixed reference radionavigation system comprising at least two reference beacons (Si, Si + 1), characterized in that, said radionavigation system being a circular type location radionavigation system, said first mobile object (M) comprises:
   - first communication means (MI) of the radioelectric type enabling interrogation of each reference beacon (Si, Si + 1) or a plurality thereof,
   - second communication means (MJ) of the radioelectric type enabling interrogation of said second mobile object (Bj) to determine the distance between the first mobile object (M) and the second mobile object (Bj), said second mobile object (Bj) comprising :
   - communication means (BIJ) of the radioelectric type providing communication between each reference beacon (Si, Si + 1) and the second mobile object (Bj), said communication means (BIJ) enabling reception of the signal at frequency, (FSi) transmitted by each reference beacon (Si, Si + 1) and retransmission at the frequency (FBj) to said second communication means (MJ) of the first mobile (M) of a signal in response to the signal (FSi) received by said communication means (BIJ), said system further comprising at the mobile (M):
   - means for calculating the distances ($\overline{MSi}$), ($\overline{SiBj}$) between the first mobile object (M) and the second mobile object (Bj) and each beacon (Si), (Si + 1), from the durations of the outward/return distances,
   - means of the circular type location for calculating the position of said first mobile object (M) and said second mobile object (Bj) relative to the reference radionavigation system and the orientation of the second direction relative to the first direction, said means for calculating the position using the previously calculated distances.

10. System according to claim 9, characterized in that said first communication means (MI) and said second communication means (MJ) of the first mobile (M) are synchronized.

11. System according to either of claims 9 and 10, characterized in that the second communication means (MJ) of the first mobile (M) used to interrogate said second mobile (Bj) and the communication means (BIJ) enabling retransmission (MJ) from the first mobile (M) of the signal (FSi) in response to interrogation operate at the same carrier frequency (FBj).

12. System according to claim 11, characterized in that said communication means (BIJ) when used to retransmit to said first mobile (M) the signal in response to the signal transmitted at frequency (FSi) and said second communication means (MJ) of the mobile (M) operate at a low power level and at a carrier frequency (FBj) different to the frequency (FSi) of the signal transmitted by each reference beacon (Si, Si + 1).

13. System for locating and orienting a first direction linked to the position and to the orientation of an autonomous first mobile object (M) and a second direction formed by a non-autonomous second mobile object (Bj) and at least one reference point on the first mobile object (M) relative to a fixed radionavigation system comprising at least two reference beacons (Si, Si + 1), characterized in that, said radionavigation system being a hyperbolic type location radionavigation system, said first mobile object (M) comprises:
   - first communication means (MI) of the radioelectric type for receiving signals at frequency (FSi, FSi + 1) transmitted by each of the reference beacons (Si, Si + 1) in a predetermined transmit sequence, said second mobile object (Bj) comprising communication means (BIJ) of the radioelectric type enabling successively reception of the signals transmitted at frequency (FSi, FSi + 1) by each of the reference beacons (Si, Si + 1) and retransmission of a signal at frequency (FBj) in response to transmission of the signals at frequency (FSi, FSi + 1), said first mobile (M) further comprising:
   - second communication means (MJ) of the radioelectric type enabling reception of the signal at frequency (FBj) transmitted by the communication means (BIJ) in response to transmission of the signals at frequency (FSi, FSi + 1) by the reference beacons (Si) (Si + 1), said system further comprising at the first mobile (M):

- means for calculating the difference ($\overline{MSi}$ $\overline{- MSi + 1}$) between the distance from the first mobile (M) to a first reference beacon (Si) and the distance from the first mobile (M) to a second reference beacon (Si + 1) for a plurality N of reference beacons (Si), the differences ($\overline{SiBj - Si + 1Bj}$) between the second mobile object (Bj) and the reference beacons (Si, Si + 1),
- means of the hyperbolic type location for calculating the position of said first mobile object (M) and said second mobile object (Bj) relative to the reference radionavigation system and the orientation of the second direction relative to the first direction, said means for calculating the position using the differences of time between the first, respectively the second, object from the reference beacons.

14. System according to claim 13, characterized in that said communication means (BIJ) when retransmitting to said first mobile (M) the signal in response to transmission of the transmit sequence by each reference beacon (Si), (Si + 1) operates at a low power level and at a carrier frequency (FBj) different to the frequency (FSi), (FSi + 1) at which each of the beacons (Si, Si + 1) transmits.

15. System according to any one of claims 9 through 14, characterized in that said communication means (BIJ) of said second mobile object (Bj) enabling reception of the signal transmitted at frequency (FSi) by each reference beacon (Si, Si + 1) and retransmission to said second communication means (MJ) of the first mobile object (M) comprises a transponder.

16. System according to any one of claims 9 through 15, characterized in that the first mobile object (M) is a ship towing a marine geophysical prospecting cable and the second mobile object (Bj) is a buoy at the trailing end of a marine geophysical prospecting cable towed by the ship.

17. System according to claim 16, characterized in that it comprises a plurality of second mobile objects each of which is a buoy at the trailing end of a respective one of a plurality of marine geophysical prospecting cables towed by a ship.

**Patentansprüche**

1. Verfahren zur Lokalisierung und Orientierung in einer ersten Richtung, die mit der Position und der Orientierung eines ersten mobilen, autonomen Objektes (M) verbunden ist, und in einer zweiten Richtung, die von einem zweiten mobilen, nicht autonomen Objekt (Bj) und wenigstens einem Bezugspunkt des ersten mobilen Objekts bezüglich eines festen Bezugsfunknavigationssystems, das wenigstens zwei Bezugsmarkierungsquellen (Si, Si + 1) umfaßt, gebildet wird, wobei das erste (M) und das zweite (Bj) mobile Objekte jeweils auf der einen Seite mit einer ersten Kommunikationsvorrichtung (MI) des funkelektrischen Typs zwischen dem ersten mobilen Objekt (M) und den Bezugsmarkierungsquellen (Si, Si + 1) und einer zweiten Kommunikationsvorrichtung (MJ) des funkelektrischen Typs zwischen dem ersten (M) und dem zweiten (Bj) mobilen Objekt und auf der anderen mit einer Kommunikationsvorrichtung (BIJ) des funkelektrischen Typs zwischen jeder Bezugsmarkierungsquellen (Si, Si + 1) und dem zweiten beweglichen Objekt (Bj) versehen sind, wobei das Verfahren darin besteht:

    a) die Position des ersten mobilen Objekts (M) bezüglich des Bezugsfunknavigationssystems und die Orientierung der ersten Richtung bezüglich des ersten mobilen Objekts (M) zu bestimmen,

    b) die Position des zweiten mobilen Objekts (Bj) bezüglich des Bezugsfunknavigationssystems zu bestimmen,

    c) den Abstandswinkel zu bestimmen, der von der ersten und zweiten Richtung gebildet wird, um die Orientierungskorrektur der ersten Richtung bezüglich der zweiten Richtung durchzuführen, dadurch gekennzeichnet, daß das Bezugsfunknavigationssystem aus einem Lokalisierungsfunknavigationssystem des zirkularen Typs besteht, wobei das Verfahren hinsichtlich der genannten Schritte a) und b) darin besteht, das nachfolgende Lokalisierungsprotokoll durchzuführen:

- Abfragen mittels der ersten Kommunikationsvorrichtung (MI) jeder der Bezugsmarkierungsquellen (Si, Si + 1) oder einer Mehrzahl davon, um ausgehend von den Zeiten des Hin- und Rückwegs zwischen dem beweglichen Objekt M und jeder der abgefragten Bezugsmarkierungsquellen (Si, Si + 1) die sukzessiven Abstände (MSi), die das erste mobile Objekt (M) von jeder der Bezugsmarkierungsquellen (Si, Si + 1) trennt, zu bestimmen,

- Bestimmen der Position des Bezugspunktes R des ersten beweglichen Objekts (M) ausgehend von den Bezugsmarkierungsquellen (Si, Si + 1),
- Erhalten mittels der Kommunikationsvorrichtung (BIJ) von dem zweiten beweglichen Objekt (Bj) das Emissionssignal der Frequenz (FSi, FSi + 1) in Antwort auf die Abfrage wenigstens einer Bezugsmarkierungsquelle (Si, Si + 1) und Rücksenden des Emissionssignals der Frequenz (FSi, FSi + 1), das durch die Kommunikationsvorrichtung (BIJ) erhalten wurde, über die zweite Kommunikationsvorrichtung (MJ) an das erste mobile Objekt (M), um ausgehend von dem Abfragezeitpunkt (Ti) jeder der Bezugsmarkierungsquellen (Si) den Weg ($\overline{MSiBjM}$) in einem geschlossenen Kreis zu bestimmen, der durch die Elementarabstände ($\overline{MSi}$, $\overline{SiBj}$, $\overline{BjM}$) gebildet wird, die jeweils das erste mobile Objekt (M), die Bezugsmarkierungsquelle (Si) und das zweite mobile Objekt (Bj) trennen,
- Abfragen mittels der zweiten Kommunikationsvorrichtung (MJ) des zweiten mobilen Objekts (Bj), um den Abstand zu bestimmen, der den Bezugspunkt des ersten mobilen Objekts (M) vom zweiten mobilen Objekt (Bj) trennt,
- Bestimmen des Abstands ($\overline{SiBj}$, $\overline{Si + 1Bj}$), der das zweite mobile Objekt (Bj) von wenigstens zwei Bezugsmarkierungsquellen (Si, Si + 1) trennt, durch Berechnung der Differenz zwischen den entsprechenden Wegabständen ($\overline{MSiBjM}$), ($\overline{MSi + 1BjM}$) und dem Abstand ($\overline{MBj}$) in dem geschlossenen Kreis,
- Bestimmen der Position des zweiten beweglichen Objekts (Bj) durch Lokalisierung des zirkularen Typs bezüglich des Bezugsfunknavigationssystems ausgehend von den Abständen ($\overline{SiBj}$, $\overline{Si + 1Bj}$), die das zweite mobile Objekt von den Bezugsmarkierungsquellen der Ordnung i, i + 1 trennen.

2. Verfahren nach Anspruch 1, dadurch gekennzeichnet, daß die Rückübertragung an das erste bewegliche Objekt M des Emissionssignals der Frequenz (FSi), das von der Kommunikationsvorrichtung (BIJ) erhalten wird, mittels der zweiten Kommunikationsvorrichtung (MJ) und/oder die Abfrage des zweiten beweglichen Objekts (Bj) mittels der zweiten Kommunikationsvorrichtung (MJ) mit schwacher Leistung und mit einer Trägerfrequenz mit einem von der Abfragefrequenz (FSi, FSi + 1) der Bezugsmarkierungsquellen (Si, Si + 1) verschiedenen Wert durchgeführt werden.

3. Verfahren zur Lokalisierung und Orientierung in einer ersten Richtung, die mit der Position und der Orientierung eines ersten mobilen, autonomen Objektes (M) verbunden ist, und in einer zweiten Richtung, die von einem zweiten mobilen, nicht autonomen Objekt (Bj) und wenigstens einem Bezugspunkt des ersten mobilen Objekts bezüglich eines festen Bezugsfunknavigationssystems, das wenigstens zwei Bezugsmarkierungsquellen (Si, Si + 1) umfaßt, gebildet wird, wobei das erste (M) und das zweite (Bj) mobile Objekt jeweils auf der einen Seite mit einer ersten Kommunikationsvorrichtung (MI) des funkelektrischen Typs zwischen dem ersten mobilen Objekt (M) und den Bezugsmarkierungsquellen (Si, Si + 1) und einer zweiten Kommunikationsvorrichtung (MJ) des funkelektrischen Typs zwischen dem ersten (M) und dem zweiten (Bj) mobilen Objekt und auf der anderen mit einer Kommunikationsvorrichtung (BIJ) des funkelektrischen Typs zwischen jeder Bezugsmarkierungsquelle (Si, Si + 1) und dem zweiten beweglichen Objekt (Bj) versehen sind, wobei das Verfahren darin besteht:

a) die Position des ersten mobilen Objekts (M) bezüglich des Bezugsfunknavigationssystems und die Orientierung der ersten Richtung bezüglich des ersten mobilen Objekts (M) zu bestimmen,

b) die Position des zweiten mobilen Objekts (Bj) bezüglich des Bezugsfunknavigationssystems zu bestimmen,

c) den Abstandswinkel zu bestimmen, der von der ersten und zweiten Richtung gebildet wird, um die Orientierungskorrektur der ersten Richtung bezüglich der zweiten Richtung durchzuführen, dadurch gekennzeichnet, daß das Bezugsfunknavigationssystem aus einem Lokalisierungsfunknavigationssystem des hyperbolischen Typs besteht, wobei das Verfahren hinsichtlich der genannten Schritte a) und b) darin besteht, das nachfolgende Lokalisierungsprotokoll durchzuführen:

- Erhalten mittels der ersten Kommunikationsvorrichtung (MI) die von jeder der Bezugsmarkierungsquellen (Si, Si + 1) abgestrahlte Emissionssequenz, um den Abstandsunterschied ($\overline{MSi}$ - $\overline{MSi + 1}$) zwischen dem Abstand des ersten beweglichen Objekts (M) zu einer ersten Bezugsmarkierungsquelle (Si) und dem Abstand des ersten beweglichen Objekts (M) zu einer zweiten Bezugsmarkierungsquelle (Si + 1) herzustellen, und das für eine Mehrzahl N von Bezugsmarkierungsquellen (Si),

- Bestimmen der Position des Bezugspunktes des ersten beweglichen Objekts (M) ausgehend von den Bezugsmarkierungsquellen (Si, Si + 1),

- Erhalten mittels der Kommunikationsvorrichtung (BIJ) von dem zweiten beweglichen Objekt (Bj) der Emissionssequenz, die von jeder der Bezugsmarkierungsquellen (Si), (Si + 1) emittiert wird, und Rücksenden mittels der Kommunikationsvorrichtung (BIJ) an das erste mobile Objekt (M) eines Antwortsignals auf die Emission der Frequenz (FS) jeder Bezugsmarkierungsquelle (Si), um den Abstand des zusammengesetzten Wegs (Si, Bj, M), der von jedem Elementarabstand $(\overline{SiBj}, \overline{BjM})$; $(\overline{Si+1Bj}, \overline{BjM})$ zwischen jeder Bezugsmarkierungsquelle (Si), dem zweiten (Bj) und dem ersten (M) beweglichen Objekt gebildet wird, zu bestimmen;

- Bestimmen der Position des zweiten beweglichen Objekts (Bj) durch Lokalisierung des hyperbolischen Typs bezüglich des Bezugsfunknavigationssystems ausgehend von der Differenz der Abstände $(\overline{SiBj} - \overline{Si+1Bj})$, die das zweite mobile Objekt Bj von den Bezugsmarkierungsquellen (Si), (Si + 1) trennen.

4. Verfahren nach Anspruch 3, dadurch gekennzeichnet, daß die Rückübertragung an das erste bewegliche Objekt M eines Antwortsignals auf die Emission jeder Bezugsmarkierungsquelle (Si) mittels der zweiten Kommunikationsvorrichtung (BIJ) mit schwacher Leistung und mit einer Trägerfrequenz mit einem von der Emission der Frequenz (FSi) der Referenzmarkierungsquellen (Si), die die Emissionssequenz erzeugen, verschiedenen Wert durchgeführt werden.

5. Verfahren nach Anspruch 4, dadurch gekennzeichnet, daS die Rückübertragung auf die Emissionssequenz synchronisiert ist, wobei die Rückübertragung zwischen den Emissionsperioden jeder Bezugsmarkierungsquelle (Si) durchgeführt wird.

6. Verfahren nach einem der Ansprüche 1 bis 5, dadurch gekennzeichnet, daß das erste bewegliche Objekt aus einem Schiff besteht, das ein Kabel zur geophysikalischen Meeresprospektion schleppt, wobei das zweite bewegliche Objekt aus der Endboje desselben Kabels besteht.

7. Verfahren nach einem der Ansprüche 1 bis 6, dadurch gekennzeichnet, daß im Hinblick auf die Ermöglichung der Lokalisierung und Orientierung einer ersten Richtung, die mit der Position und Orientierung eines ersten beweglichen Objekts (M) verbunden ist, und einer zweiten Vorzugsrichtung unter einer Mehrzahl von zweiten Richtungen, die von einer Mehrzahl von zweiten beweglichen Objekten (Bj) und wenigstens einem Bezugspunkt des ersten beweglichen Objekts (M) gebildet werden, jedes zweite bewegliche Objekt (Bj) mit einer Kommunikationsvorrichtung (BIJ) des funkelektrischen Typs zwischen jeder Bezugsmarkierungsquelle (Si, Si + 1) und jedem zweiten beweglichen Objekt (Bj) versehen ist, wobei das erste bewegliche Objekt (M) mit einer zweiten Kommunikationsvorrichtung (MJ) des funkelektrischen Typs zwischen dem ersten (M) und jedem der zweiten (Bj) beweglichen Objekte versehen ist.

8. Verfahren nach Anspruch 7, dadurch gekennzeichnet, daß die Vorzugsrichtung die mittlere Richtung der Gesamtheit der zweiten Objekte (Bj) bezüglich des Bezugspunkts des ersten beweglichen Objekts ist.

9. System zur Lokalisierung und Orientierung in einer ersten Richtung, die mit der Position und der Orientierung eines ersten mobilen, autonomen Objektes (M) verbunden ist, und in einer zweiten Richtung, die von einem zweiten mobilen, nicht autonomen Objekt (Bj) und wenigstens einem Bezugspunkt des ersten mobilen Objekts bezüglich eines festen Bezugsfunknavigationssystems, das wenigstens zwei Bezugsmarkierungsquellen (Si, Si + 1) umfaßt, gebildet wird, dadurch gekennzeichnet, daß das Funknavigationssystem ein Lokalisierungsfunknavigationssystem des zirkularen Typs ist, wobei das erste bewegliche Objekt umfaßt:

- eine erste Kommunikationsvorrichtung (MI) des funkelektrischen Typs, um die Abfrage jeder der Bezugsmarkierungsquellen (Si, Si + 1) oder einer Mehrzahl davon, sicherzustellen,

- eine zweite Kommunikationsvorrichtung (MJ) des funkelektrischen Typs, um die Abfrage des zweiten mobilen Objekts (Bj) sicherzustellen, um den Abstand zu bestimmen, der den Bezugspunkt des ersten mobilen Objekts (M) vom zweiten mobilen Objekt (Bj) trennt, wobei das zweite mobile Objekt (Bj) umfaßt:

- eine Kommunikationsvorrichtung (BIJ) des funkelektrischen Typs zwischen jeder der Bezugsmarkierungsquellen (Si, Si + 1) und dem zweiten beweglichen Objekt (Bj), wobei die Kommunikationsvorrichtung (BIJ) den Erhalt des Emissionssignals der Frequenz (FSi) jeder Bezugsmarkierungsquelle (Si, Si + 1) und die Rücksendung eines Antwortsignals mit der Frequenz (FBj) zur zweiten Kommunikationsvorrichtung (MJ) des ersten beweglichen Objekts (M) auf das von der Kommunikationsvorrichtung (BIJ) erhaltene Signal der Frequenz (FSi) sicherstellt, wobei das System außerdem im Bereich des mobile Objekts (M) umfaßt:

- eine Vorrichtung zum Berechnen der Abstände ($\overline{MSi}$), ($\overline{SiBj}$), die das erste mobile Objekt (M) und das zweite mobile Objekt (Bj) von jeder Bezugsmarkierungsquelle (Si), (Si + 1) trennen, ausgehend von den Zeiten für den Hin- und Rückweg,

- eine Vorrichtung des zirkularen Lokalisierungstyps zum Berechnen der Position des ersten (M) und des zweiten beweglichen Objekts (Bj) bezüglich des Bezugsfunknavigationssystems und der Orientierung der zweiten Richtung bezüglich der ersten Richtung, wobei die Positionsberechnungsvorrichtung die zuvor bestimmten Abstände verwendet.

10. System nach Anspruch 9, dadurch gekennzeichnet, daß die erste (MI) und die zweite (MJ) Kommunikationsvorrichtung des ersten mobilen Objekts (M) synchronisiert sind.

11. System nach einem der Ansprüche 9 oder 10, dadurch gekennzeichnet, daß die zweite Kommunikationsvorrichtung (MJ) des ersten mobilen Objekts (M) die Abfrage des zweiten mobilen Objekts (Bj) sicherstellt und daß die Kommunikationsvorrichtung (BIJ) die Rückübertragung (MJ) des Antwortsignals von dem ersten mobilen Objekt (M) auf die Abfrage (FSi), die mit derselben Trägerfrequenz arbeitet (FBj), sicherstellt.

12. System nach Anspruch 11, dadurch gekennzeichnet, daß die Kommunikationsvorrichtung (BIJ), wenn sie die Rückübertragung des Antwortsignals auf das Emissionssignal der Frequenz (FSi) an das erste mobile Objekt (M) sicherstellt, und die zweite Kommunikationsvorrichtung (MJ) des mobilen Objekts (M) mit geringer Leistung und mit einer Trägerfrequenz (FBj) arbeiten, die von der Frequenz des Emissionssignals mit der Frequenz (FSi) jeder Bezugsmarkierungsquelle (Si, Si + 1) verschieden ist.

13. System zur Lokalisierung und Orientierung in einer ersten Richtung, die mit der Position und der Orientierung eines ersten mobilen, autonomen Objektes (M) verbunden ist, und in einer zweiten Richtung, die von einem zweiten mobilen, nicht autonomen Objekt (Bj) und wenigstens einem Bezugspunkt des ersten mobilen Objekts bezüglich eines festen Bezugsfunknavigationssystems, das wenigstens zwei Bezugsmarkierungsquellen (Si, Si + 1) umfaßt, gebildet wird, dadurch gekennzeichnet, daß das Funknavigationssystem ein Lokalisierungsfunknavigationssystem des hyperbolischen Typs ist, wobei das erste bewegliche Objekt (M) umfaßt:

- eine erste Kommunikationsvorrichtung (MI) des funkelektrischen Typs, um den Erhalt von Signalen der Frequenz (FSi, FSi + 1), die von jeder der Bezugsmarkierungsquellen (Si, Si + 1) entsprechend einer bestimmten Emissionssequenz erzeugt werden, sicherzustellen, wobei das zweite bewegliche Objekt (Bj) eine Kommunikationsvorrichtung (BIJ) des funkelektrischen Typs umfaßt, um sukzessive den Erhalt der Emissionssignale der Frequenz (FSi), (FSi + 1), die von jeder der Bezugsmarkierungsquellen (Si, Si + 1) erzeugt werden, und die Rücksendung eines Antwortsignals mit der Frequenz (FBj) auf die Emission der Signale mit der Frequenz (FSi), (FSi + 1) sicherzustellen, wobei das erste mobile Objekt (M) außerdem umfaßt:

- eine zweite Kommunikationsvorrichtung (MJ) des funkelektrischen Typs, um den Erhalt des Antwortsignals der Frequenz (FBj), das von der Kommunikationsvorrichtung (BIJ) in Antwort auf die Emission der Signale der Frequenz (FSi, FSi + 1) von den Bezugsmarkierungsquellen (Si) (Si + 1) emittiert wird, sicherzustellen, wobei das System außerdem im Bereich des mobile Objekts (M) umfaßt:

- eine Vorrichtung zum Berechnen der Abstandsdifferenzen ($\overline{MSi\text{-}MSi + 1}$) zwischen dem Abstand des ersten mobilen Objekts (M) zu einer ersten Bezugsmarkierungsquelle (Si) und dem Abstand des ersten mobilen Objekts (M) zu einer zweiten Bezugsmarkierungsquelle (Si + 1) für eine Mehrzahl von Bezugsmarkierungsquellen (Si), wobei Abstandsdifferenzen $(\overline{SiBj} - \overline{Si+1Bj})$ das zweite bewegliche Objekt (Bj) von den Bezugsmarkierungsquellen (Si), (Si + 1) trennen,

- eine Vorrichtung des hyperbolischen Lokalisierungstyps zum Berechnen der Position des ersten (M) und des zweiten beweglichen Objekts (Bj) bezüglich des Bezugsfunknavigationssystems und der Orientierung der zweiten Richtung bezüglich der ersten Richtung, wobei die Positionsberechnungsvorrichtung die Zeitdifferenzen die das erste, beziehungsweise das zweite Objekt von den Bezugsmarkierungsquellen trennen, verwendet.

14. System nach Anspruch 13, dadurch gekennzeichnet, daß die Kommunikationsvorrichtung (BIJ), wenn sie die Rückübertragung des Antwortsignals auf die sequentielle Emission jeder Bezugsmarkierungsquelle (Si), (Si + 1) an das erste mobile Objekt (M) sicherstellt, mit geringer Leistung und mit einer Trägerfrequenz (FBj) arbeitet, die von der Frequenz (FSi), (FSi + 1) der Emission jeder der Bezugsmarkierungsquellen (Si, Si + 1) verschieden ist.

15. System nach einem der Ansprüche 9 bis 14, dadurch gekennzeichnet, daß die Kommunikationsvorrichtung (BIJ) des zweiten mobilen Objekts (Bj), die den Empfang des Emissionssignals der Frequenz (FSi) jeder der Bezugsmarkierungsquellen (Si, Si + 1) und die Rückübertragung zur zweiten Kommunikationsvorrichtung (MJ) des ersten mobilen Objekts (M) sicherstellt, einen Responder umfaßt.

16. System nach einem der Ansprüche 9 bis 15, dadurch gekennzeichnet, daß das erste mobile Objekt (M) aus einem Schiff besteht, das ein Kabel zur geophysikalischen Meeresprospektion schleppt, und daß das zweite mobile Objekt (Bj) aus der Endboje eines von dem Schiff geschleppten Kabels zur geophysikalischen Meeresprospektion besteht.

17. System nach Anspruch 16, dadurch gekennzeichnet, daß es eine Mehrzahl von zweiten mobilen Objekten umfaßt, die jeweils aus den Endbojen einer Mehrzahl von einem Schiff geschleppten Kabeln zur geophysikalischen Meeresprospektion bestehen.

S1  S2  Si  Si+1  SN

N

R

BIJ  Δ2

Bj

MI

M  MJ

Δ1

FIG_1a

FIG_1b

FIG_1c

21

## FIG. 2a

## FIG. 2b